# EUROPEAN PATENT SPECIFICATION

(11) **EP 0 835 904 B1**
(45) Date of publication and mention of the grant of the patent: **09.07.2003**
(21) Application number: 97919660.7
(22) Date of filing: 23.04.1997
(51) Int. Cl.: C08K 5/3477, C08K 3/32, C08K 7/16, C08L 101/00, C08L 67/00, C08K 5/13, C08K 3/02, C08K 5/3492

(54) **FLAME-RETARDANT RESIN COMPOSITION AND MOLDINGS**
FLAMMGESCHÜTZTE HARZZUSAMMENSETZUNG UND FORMMASSEN
COMPOSITION ET MOULAGES DE RESINE IGNIFUGE

(30) Priority: 30.04.1996 JP 10915396
(43) Date of publication of application: 15.04.1998
(73) Proprietor: TORAY INDUSTRIES, INC., Tokyo 103-8666 (JP)
(72) Inventor: MATSUOKA, Hideo, Midori-ku, Nagoya-shi, Aichi 458 (JP); YAMAUCHI, Kouji, Midori-ku, Nagoya-shi, Aichi 458 (JP); INOUE, Toshihide, Ichinomiya-shi, Aichi 491 (JP)
(74) Representative: Coleiro, Raymond
(86) International application number: JP9701410
(87) International publication number: WO97041171

(56) References cited:
- EP-A- 0 465 927
- WO-A-92/09653
- JP-A- 5 287 119
- JP-A- 5 295 164
- JP-A- 6 065 416
- JP-A- 6 179 823
- JP-A- 54 094 540
- JP-A- 55 161 848
- JP-A- 63 056 544

## Description

The present invention relates to a flame retardant resin composition employing a non-halogen based flame retardant agent. More particularly, the invention relates to a flame retardant resin composition that is excellent in the flame retardancy of highly thin-walled portions, free from deterioration of mechanical properties, and excellent in electrical characteristics, and that is suitable for electrical and electronic appliance component parts, motor vehicle component parts and machine component parts, such as connectors, relays, switches, case members, transformer members, coil bobbins and the like.

Thermoplastic resins, such as polyester resins represented by polyethylene terephthalate, polybutylene terephthalate, polyethylene naphthalate, polycyclohexanedimethylene terephthalate and the like, polycarbonate resins, polyamide resins, polyphenylene oxide resins, and the like, are being used as injection molding materials in a wide range of applications, such as machine mechanism component parts, electrical component parts, motor vehicle component parts and the like, because of their excellent characteristics. However, since these thermoplastic resins are inherently flammable, it is often required that the resins have safety performance against fire, that is, flame retardancy, for use as industrial materials, in addition to normally required balance of chemical and physical characteristics.

In a method conventionally employed for imparting flame retardancy to thermoplastic resins, a halogen based organic compound as a flame retardant agent and an antimony compound as a flame retardation assistant are mixed into a resin. However, this method has problems such as large amounts of smoke generated during combustion.

Accordingly, there has recently been a strong demand for use of a flame retardant agent that contains no halogen in order to overcome such drawbacks of halogen based flame retardant agents.

A widely known method for making a thermoplastic resin flame-retardant without using a halogen based flame retardant agent, is addition of a hydrated metallic compound such as a aluminium hydroxide, magnesium hydroxide or the like. However, this method has a drawback in that in order to obtain a sufficient flame retardancy, the hydrated metallic compound needs to be added in a large amount resulting in deterioration of essential characteristics of the resin.

Addition of red phosphorus has been disclosed as a method for making a thermoplastic resin flame-retardant without using such a hydrated metallic compound, in JP-A-5-78560, JP-A-5-287119, JP-A-5-295164, and JP-A-5-339417. However, although the disclosed resin compositions are all useful flame retardant resin materials containing no halogen based flame retardant agent, the compositions have problems in that the high level flame retardation effect is insufficient, excellent mechanical properties of thermoplastic resins are degraded, or a large amount of decomposition gas is generated during retention following heat-melting of a flame retardant resin composition.

EP-A-19768 discloses a flame retardant resin composition comprising a polyamide resin, an inorganic filler, red phosphorous and melamine cyanurate. EP-A-465927 proposes a resin composition which comprises a styrene-acrylonitrile copolymer, red phosphorous and melamine cyanurate. WO92/09653 proposes a fire retardant system for a saturated polyester, which comprises red phosphorous with melamine cyanurate.

It is an aim of the present invention to impart a high level of flame retardancy to a thermoplastic resin using a non-halogen based flame retardant agent and to provide a flame retardant resin composition having good formability and good mechanical properties, and a form thereof.

Accordingly, the present invention provides a flame retardant resin composition comprising:
(A) 100 parts by weight of a thermoplastic polyester resin,
(B) 0.1 - 100 parts by weight of red phosphorous, and
(C) 0.5 - 100 parts by weight of a salt formed from a triazine based compound and cyanuric acid or isocyanuric acid, wherein the number average dispersion particle diameter of the red phosphorus in the resin composition is 50-0.01 µm, and wherein the number average dispersion particle diameter of the salt formed from a triazine based compound and cyanuric acid or isocyanuric acid is 100-0.01 µm.

Embodiments of the present invention provide a flame retardant resin composition as described above wherein said triazine based compound is a compound represented by the following general formula (1). 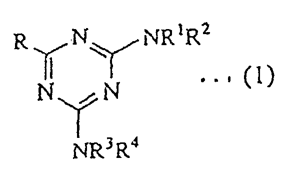 (In the above formula, R¹, R², R³, and R⁴ are the same ones or different ones selected from the following: hydrogen, aryl groups, alkyl groups, aralkyl groups, cycloalkyl groups and -CONH₂. R is the same group as -NR¹R² or -NR³R⁴ in the above formula or a group selected, independently of these groups, from the following: hydrogen, aryl groups, alkyl groups, aralkyl groups, cycloalkyl groups, -NH₂ and -CONH₂.)

Further embodiments of the present invention provide a flame retardant resin composition wherein 5-140 parts by weight of a filling material is further compounded into the aforementioned flame retardant resin composition.

Embodiments of the present invention also provide a flame retardant resin composition wherein 0.01-10 parts by weight of a fluorocarbon based resin is further compounded into the aforementioned flame retardant resin composition.

Further embodiments of the present invention provide a flame retardant resin composition wherein the triazine based compound is melamine.

Embodiments of the present invention may also provide a flame retardant resin composition as described above wherein the filling material is lass fiber.

Still further embodiments of the present invention concern a flame retardant resin composition wherein 0.01-3 parts by weight of a hindered phenol based stabilizing agent is further compounded into the aforementioned flame retardant resin composition.

Furthermore, the present invention provides a form formed from a flame retardant resin composition as described above.

Furthermore, the present invention is a form wherein the aforementioned form is one of the following: a machine mechanism component part, an electrical component part, an electronic component part, and a motor vehicle component part.

Particularly preferred embodiments will now be described, by way of example.

Example flame retardant resin compositions of the present invention will be described in detail below. The thermoplastic resin (A) of the present invention is a synthetic resin that exhibits fluidity when heated and, utilizing this characteristic, can be subjected to molding or forming process. Specific examples thereof are, for example, thermoplastic polyesters such as polyester, non-liquid crystal polyester, and liquid crystal polyester, elastomers such as polyester-polyether elastomer, polyester-polyester elastomer and mixtures of two or more of the aforementioned synthetic resins which may include polyolefin based polymers such as polycarbonate, polyamide, polyphenylene oxide, phenoxy resin, polyphenylene sulfide, polypropylene, and polyethylene, polyolefin based copolymers such as ethylene-propylene copolymer, ethylene-1-butene copolymer, ethylene-propylene-non conjugative diene copolymer, ethylene-ethyl acrylate copolymer, ethylene-glycidyl methacrylate copolymer, ethylene-vinyl acetate-glycidyl methacrylate copolymer, ethylene-propylene-g-maleic anhydride copolymer, and ABS resin. Non-liquid crystal polyester is preferably used. Specific examples of the non-liquid crystal polyester are represented by polyethylene terephthalate, polypropylene terephthalate, polybutylene terephthalate, polyethylene naphthalate, polybutylene naphthalate, polycyclohexanedimethylene terephthalate, polyethylene-1,2-bis(phenoxy)ethane-4,4'-dicarboxylate and the like and, in addition, copolymer polyesters such as polyethylene isophthalate-terephthalate, polybutylene terephthalate-isophthalate, polybutylene terephthalate-decanoic dicarboxylate, polycyclohaxanedimethylene terephthalate-isophthalate and the like. Among these, polybutylene terephthalate, polybutylene naphthalate, polycyclohaxanedimethylene terephthalate, polyethylene naphthalate and polyethylene terephthalate, which are well-balanced in mechanical characteristics, formability and the like, may preferably be used. Particularly, polybutylene terephthalate may preferably be used.

The red phosphorus (B) used in the present invention may be compounded into the thermoplastic resin directly without performing any treatment. However, since red phosphorus has characteristics that it may gradually dissolve into water or ignite during storage, red phosphorus treated for preventing such incidents is preferably used. Such a red phosphorus treating method is, for example, a method in which a small amount of aluminium hydroxide or magnesium hydroxide is added to red phosphorus to catalytically restrain the oxidation of red phosphorus, a method in which red phosphorus is coated with paraffin or wax to restrain contact with moisture, a method in which red phosphorus is stabilized by mixing it with e-caprolactam or trioxane, a method in which red phosphorus is stabilized by coating it with a thermoplastic resin such as a phenol based thermoplastic resin, a melamine based thermoplastic resin, an epoxy based thermoplastic resin, an unsaturated polyester based thermoplastic resin or the like, a method in which red phosphorus is stabilized by treating it with an aqueous solution of a salt of a metal, such as copper, nickel, silver, iron, aluminium or titanium, so that a metallic phosphorus compound precipitates on the surface of red phosphorus, a method in which red phosphorus is coated with aluminium hydroxide, magnesium hydroxide, titanium hydroxide, zinc hydroxide or the like, a method in which red phosphorus is stabilized by coating the red phosphorus surface with iron, cobalt, nickel, manganese, tin or the like by electroless plating, or methods combining these methods. Preferred are the method in which red phosphorus is stabilized by coating it with a thermoplastic resin such as a phenol based thermoplastic resin, a melamine based thermoplastic resin, an epoxy based thermoplastic resin, an unsaturated polyester based thermoplastic resin or the like, and the method in which red phosphorus is coated with aluminium hydroxide, magnesium hydroxide, titanium hydroxide, zinc hydroxide or the like. More preferred is a method in which red phosphorus is stabilized by double-coating it with aluminium hydroxide, magnesium hydroxide, titanium hydroxide, zinc hydroxide or the like and then with a thermoplastic resin such as a phenol based thermoplastic resin, a melamine based thermoplastic resin, an epoxy based thermoplastic resin, an unsaturated polyester based thermoplastic resin or the like.

Furthermore, the average particle diameter of red phosphorus prior to the compounding into the resin is preferably 50-0.01 µm and, more preferably, 45-0.1 µm in view of the number average dispersion particle diameter of red phosphorus in the resultant resin composition and the flame retardancy, mechanical strength, surface characteristics and electrical characteristics (tracking resistance) of the form.

The number average dispersion particle diameter of the red phosphorus in the flame retardant resin composition of the present invention is 50-0.01 µm and, preferably, 30-0.05 µm and, more preferably, 20-0.1 µm, in view of the flame retardancy, mechanical strength, surface characteristics and electrical characteristics (tracking resistance) of the resultant form.

The amount of red phosphorus (B) added according to the present invention is 0.1-100 parts by weight and, preferably, 0.5-80 parts by weight and, more preferably, 1-50 parts by weight, relative to 100 parts by weight of the thermoplastic resin.

The salt (C) formed from a triazine based compound and cyanuric acid or isocyanuric acid used in the present invention is an adduct of the triazine based compound and cyanuric acid or isocyanuric acid, whose composition is normally 1:1 (mole ratio) and, in some cases, 2:1 (mole ratio). Among triazine based compounds, the compounds that do not form salts together with cyanuric acid or isocyanuric acid are excluded.

As examples of the aforementioned triazine based compound, compounds represented by the following general formula (1) are cited. 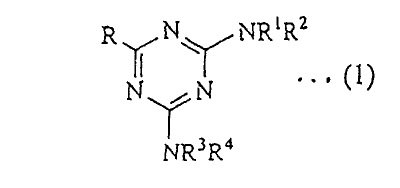 (In the above formula, R¹, R², R³, and R⁴ are the same ones or different ones selected from the following: hydrogen, aryl groups, alkyl groups, aralkyl groups, cycloalkyl groups and -CONH₂. R is the same group as -NR¹R² or -NR³R⁴ in the above formula or a group selected, independently of these groups, from the following: hydrogen, aryl groups, alkyl groups, aralkyl groups, cycloalkyl groups, -NH₂ and -CONH₂.)

In the general formula (1), R¹, R², R³, and R⁴ are the same ones or different ones selected from the following: hydrogen, aryl groups, alkyl groups, aralkyl groups, cycloalkyl groups and -CONH₂. Preferably, the aryl groups have carbon numbers of 6-15, and the alkyl groups have carbon numbers of 1-10, and the aralkyl groups have carbon numbers of 7-16, and the cycloalkyl groups have carbon numbers of 4-15. R is the same group as -NR¹R² or -NR³R⁴ in the above formula or a group selected, independently of these groups, from the following: hydrogen, aryl groups, alkyl groups, aralkyl groups, cycloalkyl groups, -NH₂ and -CONH₂. Preferably, the aryl groups have carbon numbers of 6-15, and the alkyl groups have carbon numbers of 1-10, and the aralkyl groups have carbon numbers of 7-16, and the cycloalkyl groups have carbon numbers of 4-15.

Specific examples of R¹, R², R³, and R⁴ are hydrogen, phenyl group, p-toluyl group, α-naphthyl group, β-naphthyl group, methyl group, ethyl group, n-propyl group, isopropyl group, n-butyl group, sec-butyl group, tert-butyl group, hydroxymethyl group, methoxymethyl group, benzyl group, cyclopenthyl group, cyclohexyl group, cycloheptyl group, 2-methyl-1-pentyl group, 4-methyl-1-cyclohexyl group, amide group, and the like. Preferred among these are hydrogen, phenyl group, methyl group, hydroxymethyl group, methoxymethyl group, benzyl group, and amide group.

Specific examples of R are amino group, amide group, methylamino group, dimethylamino group, ethylamino group, diethylamino group, mono(hydroxymethyl)amino group, di(hydroxymethyl)amino group, mono(methoxymethyl)amino group, di(methoxymethyl)amino group, phenylamino group, diphenylamino group, hydrogen, phenyl group, p-toluyl group, α-naphthyl group, β-naphthyl group, methyl group, ethyl group, n-propyl group, isopropyl group, n-butyl group, sec-butyl group, tert-butyl group, benzyl group, cyclopenthyl group, cyclohexyl group, cycloheptyl group, 2-methyl-1-pentyl group, 4-methyl-1-cyclohexyl group, and the like. Preferred among these are amino group, amide group, methyl group, mono(hydroxymethyl)amino group, di(hydroxymethyl)amino group, mono(methoxymethyl)amino group, di(methoxymethyl)amino group, amino group, phenyl group, and benzyl group.

Among the salts of compounds represented by the general formula (1) and cyanuric acid or isocyanuric acid, salts of melamine, benzoguanamine, acetoguanamine, 2-amide-4,6-diamino-1,3,5-triazine, mono(hydroxymethyl)melamine, di(hydroxymethyl)melamine and tri(hydroxymethyl)melamine are preferable, and salts of melamine, benzoguanamine and acetoguanamine are particularly preferable.

The salt of a triazine based compound mentioned above and cyanuric acid or isocyanuric acid may be obtained in the form of powder by forming water slurry of a mixture of a triazine based compound and cyanuric acid or isocyanuric acid, thoroughly mixing it so that the salt of the two substances becomes the form of fine particles, and then filtering and drying the slurry. Although the salt is different from a simple mixture, the salt does not need to be completely pure but small amounts of unreacted triazine based compound or cyanuric acid or isocyanuric acid may remain in the salt. The number average dispersion particle diameter of the salt prior to the compounding into the resin is, preferably, 100-0.01 µm and, more preferably, 80-10 µm, in view of the number average dispersion particle diameter of the salt in the resultant resin composition and the flame retardancy, mechanical strength, surface characteristics and electrical characteristics (tracking resistance) of the form. If the dispersion of the salt is not good, a dispersing agent, such as tris(β-hydroxyethyl)isocyanurate or the like, may be used.

The number average dispersion particle diameter of the salt of the triazine based compound and cyanuric acid or isocyanuric acid in the flame retardant resin composition of the present invention is 100-0.01 or less µm and, preferably, 90-0.1 µm and, more preferably, 80-0.5 µm, in view of the flame retardancy, mechanical strength, surface characteristics and electrical characteristics (tracking resistance) of the resultant form.

The amount of salt used is 0.5-100 parts by weight and, preferably, 2-80 parts by weight and, more preferably, 3-70 parts by weight, relative to 100 parts by weight of the thermoplastic resin (A).

If a fluorocarbon based resin is added to the flame retardant resin composition of the present invention, the falling of droplets (dripping) during combustion is restrained. Examples of such a fluorocarbon based resin are polytetrafluoroethylene, polyhexafluoropropylene, (tetrafluoroethylene/hexafluoropropylene) copolymer, (tetrafluoroethylene/perfluoroalkylvinyl ehter) copolymer, (tetrafluoroethylene/ethylene) copolymer, (hexafluoropropylene/propylene) copolymer, polyvinylidenfluoride, (vinylidenfluoride/ethylene) copolymer, and the like. Among these, polytetrafluoroethylene, (tetrafluoroethylene/perfluoroalkylvinyl ehter) copolymer, (tetrafluoroethylene/hexafluoropropylene) copolymer, (tetrafluoroethylene/ethylene) copolymer and polyvinylidenfluoride are preferable, and polytetrafluoroethylene and (tetrafluoroethylene/ethylene) copolymer are particularly preferable.

The amount of fluorocarbon based resin added is noramlly 0.01-10 parts by weight and, preferably, 0.1-5 parts by weight and, more preferably, 0.2-3 parts by weight relative to 100 parts by weight of the thermoplastic resin in view of the mechanical properties and the formability.

The flame retardant resin composition of the present invention has been found to maintain very good resistance to hydrolysis even under high temperatures for a long time if a hindered phenol based stabilizing agent is used. Examples of such a stabilizing agent are triethylene glycol-bis[3-(3-t-butyl-5-methyl-4-hydroxyphenyl)propionate], 1,6-hexanediol-bis[3-(3,5-di-t-butyl-4-hydroxyphenyl)propionate], pentaerythrityl-tetrakis[3-(3,5-di-t-butyl-4-hydroxyphenyl)propionate], 2,2-thio-diethylenebis[3-(3,5-di-t-butyl-4-hydroxyphenyl)propionate], octadecyl-3-(3,5-di-t-butyl-4-hydroxyphenyl)propionate, 3,5-di-t-butyl-4-hydroxybenzyl phosphate diethyl ester, 1,3,5-trimethyl-2,4,6-tris(3,5-di-t-butyl-4-hydroxybenzyl)benzene, bis or tris(3-t-butyl-6-methyl-4-hydroxyphenyl)propane, N,N'-hexamethylenebis(3,5-di-t-butyl-4-hydroxy-hydrocinnamamide), N,N'-trimethylenebis(3,5-di-t-butyl-4-hydroxy-hydrocinnamamide), and the like.

According to the present invention, it is possible to add such a hindered phenol based stabilizing agent if necessary. In such a case, the amount of the hindered phenol based stabilizing agent added is normally 0.01-3 parts by weight and, preferably, 0.01-3 parts by weight and, more preferably, 0.03-0.5 parts by weight relative to 100 parts by weight of the thermoplastic resin (A).

The flame retardant resin composition of the present invention may be considerably improved in strength, rigidity, heat resistance and the like by adding a filling material in the form of fiber and/or particles.

Specific examples of such a filling material are glass fiber, carbon fiber, metallic fiber, aramid fiber, asbestos, potassium titanate whiskers, wollastenite, glass flakes, glass beads, talc, mica, clay, calcium carbonate, barium sulfate, titanium oxide, aluminium oxide, and the like. Among these, chopped strand type glass fiber may preferably be used.

The amount of such a substance added is preferably 5-140 parts by weight and, more preferably, 5-100 parts by weight relative to 100 parts by weight of the thermoplastic resin (A).

The flame retardant resin composition of the present invention may be improved in, for example, heat resistance, strength and stability during extrusion, molding by adding a stabilizing agent for red phosphorus.

Specific examples of such a red phosphorus stabilizing agent are cadmium oxide, zinc oxide, copper oxide, iron oxide, cobalt oxide, manganese oxide, molybdenum oxide, titanium oxide, tin oxide, and the like. Among these, titanium oxide may preferably be used.

The amount of such a substance added is preferably 0.01-5 parts by weight and, more preferably, 0.1-3 parts by weight relative to 100 parts by weight of the thermoplastic resin (A)

Furthermore, it is possible to add to the flame retardant resin composition of the present invention, one or more of ordinary additives, such as anti-oxidizing agents of phosphorus based type, sulfur based type and the like, which are other than hindered phenol based type, heat stabilizing agents, ultraviolet absorbing agents, lubricants, mold releasing agents, coloring agents including dyes and pigments, and the like, within such ranges that the object of the present invention is not violated.

The flame retardant resin composition of the present invention is produced by an ordinarily known method. For example, the composition may be prepared by supplying a thermoplastic resin (A), red phosphorus (B), salt (C) of cyanuric acid or isocyanuric acid, and other necessary additives to an extruder or the like after pre-mixing the materials or without pre-mixing them, and thoroughly melting and kneading the materials. In this case, for example, a triple-screw or double-screw extruding machine or a single-screw extruding machine having a "uni-melt" type screw, and a kneader type kneading machine may be used. For the control of aspect ratio, it is particularly preferred to use such a machine with or without several kneading elements inserted into a screw.

The flame retardant resin composition thus obtained may be formed into moldings by injection molding, extrusion molding, compression molding or the like, or into formed articles such as sheets, films or the like. Among these applications, the composition is particularly suitable for injection moldings. Exploiting the features, the composition may effectively be used for machine mechanism component parts, electrical and electronic component parts and motor vehicle component parts.

### EXAMPLES

The advantages of the present invention will be described in detail hereinafter with reference to examples. The part used herein always means part by weight. Method of measuring various characteristics are as follows.

### (1) Mechanical Characteristics

Dumbbell test pieces obtained by injection molding were used to measure tensile yield strength and breaking elongation according to ASTM D-638.

### (2) Flame Retardancy

Flame retardancy evaluation test pieces obtained by injection molding and press forming were used to evaluate flame retardancy according to the evaluation standards defined in UL94. The level of flame retardancy decreases in the order of V-0>V-1>V-2>HB.

### (3) Number Average Dispersion Particle Diameter

Thin pieces were cut out from flame retardancy evaluation test pieces using an ultra-microtome, and photographs of the pieces were taken using an optical microscope (transmitted light) and a transmission type electron microscope. The average value of the maximum diameters of 100 individuals randomly selected from the microscopic photographs is determined and defined as a number average dispersion particle diameter.

### (4) Tracking Resistance

Test pieces of 80 mm × 80 mm and 3 mm in thickness obtained by injection molding were used to perform tracking resistance test according to the IEC112 test standards, to measure CTI (comparative tracking index). The obtained CTIs (V) are grouped as follows: CTI≥600 as Rank 0, 400≤CTI<600 as Rank 1, 250≤CTI<400 as Rank 2, 170≤CTI<250 as Rank 3, 100≤CTI<170 as Rank 4, and 0≤CTI<100 as Rank 5.

### REFERENCE EXAMPLE 1

Commercially available reagent red phosphorus (Wakou Junyaku) was classified to obtain powder having particle diameters of 32 µm or less. This powder is termed as red phosphorus A. Powder having particle diameters of 50 µm or greater obtained by similar classification is termed as red phosphorus B. Surface-treated red phosphorus (Novared 120 by Rinkagaku Kougyou Sha) was classified to obtain powder having particle diameters of 32 µm or less. This powder is termed as red phosphorus C.

### REFERENCE EXAMPLE 2

An equimolar mixture of melamine and cyanuric acid was suspended in 10 folds by weight ratio of hot water and thoroughly stirred. The slurry was then filtered thereby obtaining white cake. Then the cake was vacuum-dried at 70°C, then powdered and classified into powder having particle diameters of 50 µm or less. The powder thus obtained is termed as cyanurate salt A. Powder having particle diameters of 100 µm or greater obtained after similar powdering is termed as cyanurate salt B.

### REFERENCE EXAMPLE 3

Powder having particle diameters of 50 µm or less obtained in substantially the same manner as in Reference Example 2 except that benzoguanamine was used in place of melamine, is termed as cyanurate salt C. Powder having particle diameters of 100 µm or greater is termed as cyanurate salt D. In the following, Examples 27 to 30 do not illustrate the invention of the accompanying claims.

### EXAMPLES 1-24, COMPARATIVE EXAMPLES 1-25

Various types of red phosphorus and salts of cyanuric acid or isocyanuric acid, other additives as shown in Tables 1-4 were mixed with 100 parts by weight of polybutylene terephthalate (hereinafter simply referred to as "PBT") whose limiting viscosity is 0.85 (25°C, o-chlorphenol solution). The mixtures were melted and extruded at resin temperature of 260°C by using a uni-directionally rotating double-screw extruder with a screw diameter of 30 mm and L/D45.5 (TEX-30 by Nippon Seikou Sha, wherein two double-threaded screws were used with an inter-mesh of 3.5 mm, the screws having a high kneading power configuration in which screw elements formed of 10 kneading discs with a tilt of 45° and L/D=4 are arranged in a forward-reverse order, and a reverse full flight element is added) and a single-screw extruder with a screw diameter of 30 mm and L/D22 (VS30-22 Model by Tanabe Plastic Sha, with a full flight screw). After the resultant pellets were dried, flame retardancy evaluation test pieces based on UL94 and tensile test pieces defined in ASTMD-638 were prepared by injection molding (at mold temperature of 80°C).

The measurement results of number average dispersion particle diameter, flame retardancy and mechanical characteristics of the individual samples are summarized and shown in Tables 1-4.

In the tables, the stabilizing agent is pentaerythrutyl-tetrakis[3-(3,5-di-t-butyl-4-hydroxyphenyl)propionate] ("IR-1010" by Chibageigy Co., Ltd.). GF indicates glass fiber.

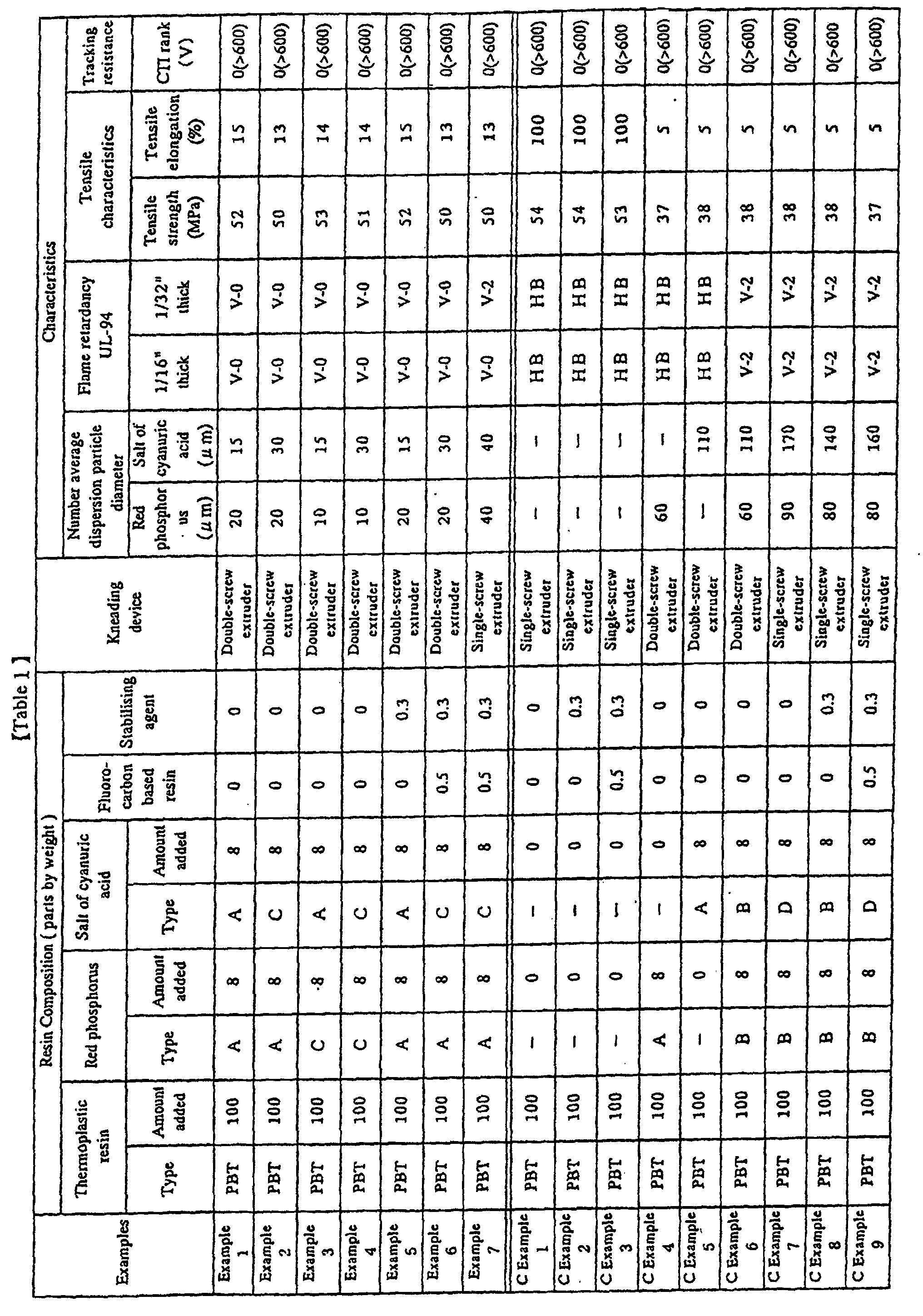

From Examples 1-6, it is understandable that fine dispersion in resin can be achieved by compounding both of finely powdered red phorphorus and cyanurate salt according to the present invention into PBT, and using a double-screw extruder having a high kneading power screw configuration, and that, as a result, a high level of flame retardancy can be provided and excellent mechanical characteristics are developed.

From Example 7, fine dispersion in resin can be achieved even if a low kneading power single-screw extruder is used, by compounding both of finely powdered red phosphorus and cyanurate salt. However, compared with Examples 1-6, the dispersion particle diameter in resin slightly increases, and the flame retardancy at 1/32" decreases.

As understood from Comparative Examples 1-3, the PBT wherein red phosphorus or cyanurate salt is not compounded is good in mechanical characteristics but inferior in flame retardancy. From Comparative Example 4, it is understandable that even if only the fine powder red phosphorus obtained by classification is compounded and a double-screw extruder having a high kneading power screw configuration is used, the red phosphorus particle diameter in the resin composition becomes large due to secondary aggregation, so that a high level of flame retardancy is not developed and that the mechanical characteristics considerably deteriorate. From Comparative Example 5, it is understandable that even if only the fine powder cyanurate salt obtained by classification is compounded and a double-screw extruder having a high kneading power screw configuration is used, the cyanurate salt particle diameter in the resin composition becomes large due to secondary aggregation, so that a high level of flame retardancy is not developed and that the mechanical characteristics considerably deteriorate.

From Comparative Examples 6-9, it is understandable that despite employing both red phosphorus and cyanurate salt in PBT, a high level of flame retardancy is not developed and the mechanical characteristics considerably deteriorate if the number average dispersion particle diameter in the resin composition is large.

According to the present invention, excellent tracking resistance can be developed by compounding both red phosphorus and cyanurate salt. However, since resins wherein GF is not compounded are inherently good in tracking resistance (600V or higher, which equaled or exceeded the measurement limit), the differences in tracking resistance among Examples 1-7 and Comparative Examples 1-9 could not be obtained as measurements.

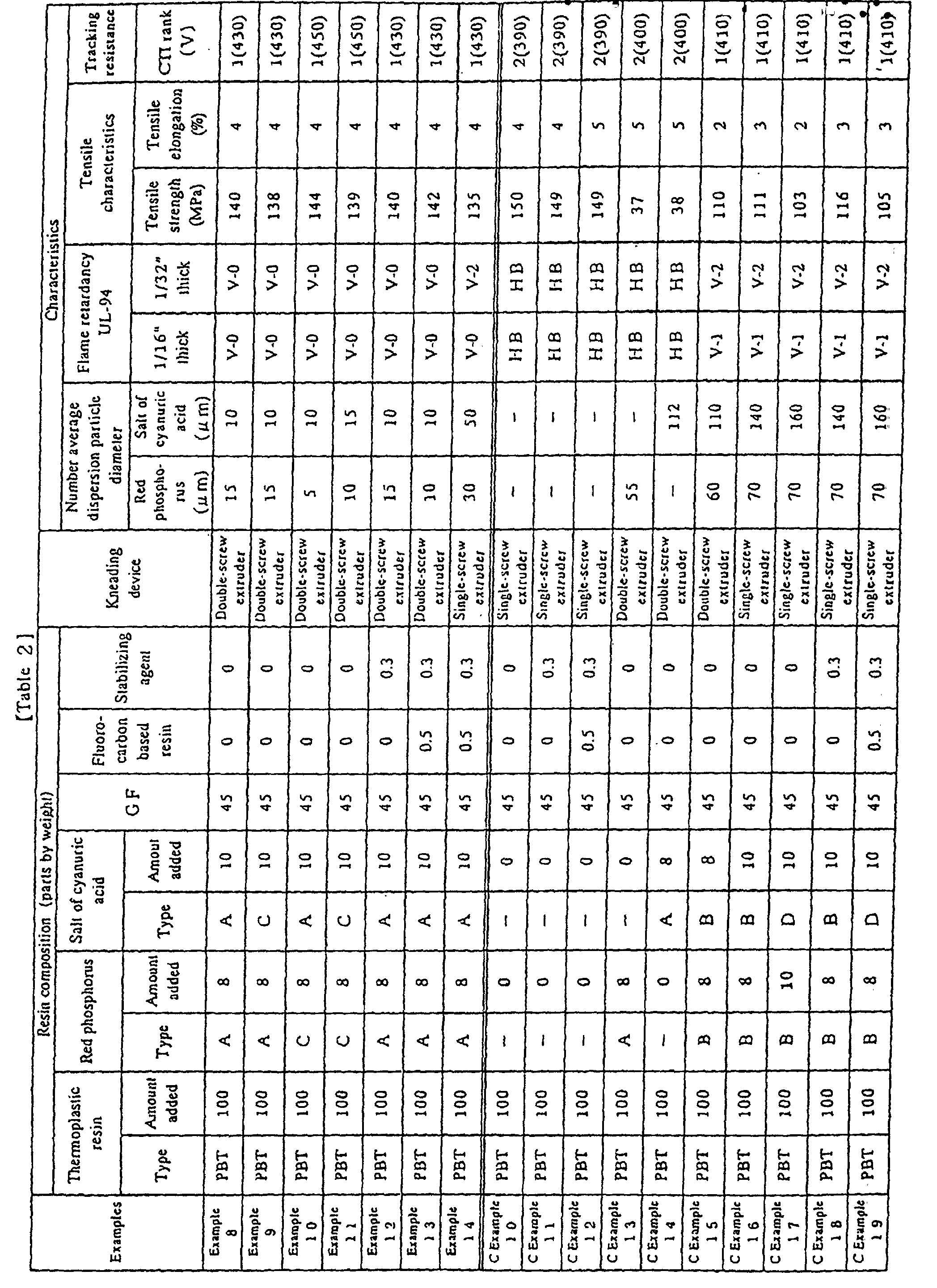

In Examples 8-14 and Comparative Examples 10-19, GF was compounded. From Examples 8-14 and Comparative Examples 10-19, it is understandable that even in a case where reinforcement is provided by glass fiber, fine dispersion in resin can be achieved and a high level of flame retardancy can be provided and, further, excellent mechanical characteristics are developed, by compounding both of finely powdered red phosphorus and cyanurate salt and using a double-screw extruder having a high kneading power screw configuration.

In contrast, from Comparative Examples 10-12, it is understandable that PBTs wherein red phosphorus or cyanurate salt is not compounded and reinforcement is provided by glass fiber are good in mechanical characteristics but inferior in flame retardancy.

From Comparative Example 13, it is understandable that even if only the fine powder red phosphorus obtained by classification is compounded and a double-screw extruder having a high kneading power screw configuration is used, the red phosphorus particle diameter in the resin composition becomes large due to secondary aggregation, so that flame retardancy is not developed and the mechanical characteristics considerably deteriorate.

From Comparative Example 14, it is understandable that even if only the fine powder cyanurate salt obtained by classification is compounded and a double-screw extruder having a high kneading power screw configuration is used, the cyanurate salt particle diameter in the resin composition becomes large due to secondary aggregation, so that a high level of flame retardancy is not developed and the mechanical characteristics considerably deteriorate.

It is also understandable that whereas PBTs containing glass fiber exhibit Rank 2 (390V) in tracking resistance as in Comparative Examples 10-12, the tracking resistance improves to Rank 1 (430-450V) by compounding both of fine powder red phosphorus and cyanurate salt obtained by classification, and using a double-screw extruder having a high kneading power screw configuration to achieve fine dispersion in resin, as in Examples 8-14.

From Comparative Examples 15-19, it is understandable that despite compounding red phosphorus and cyanurate salt, the tracking resistance improving effect is small if the dispersion particle diameter in the resin composition is large.

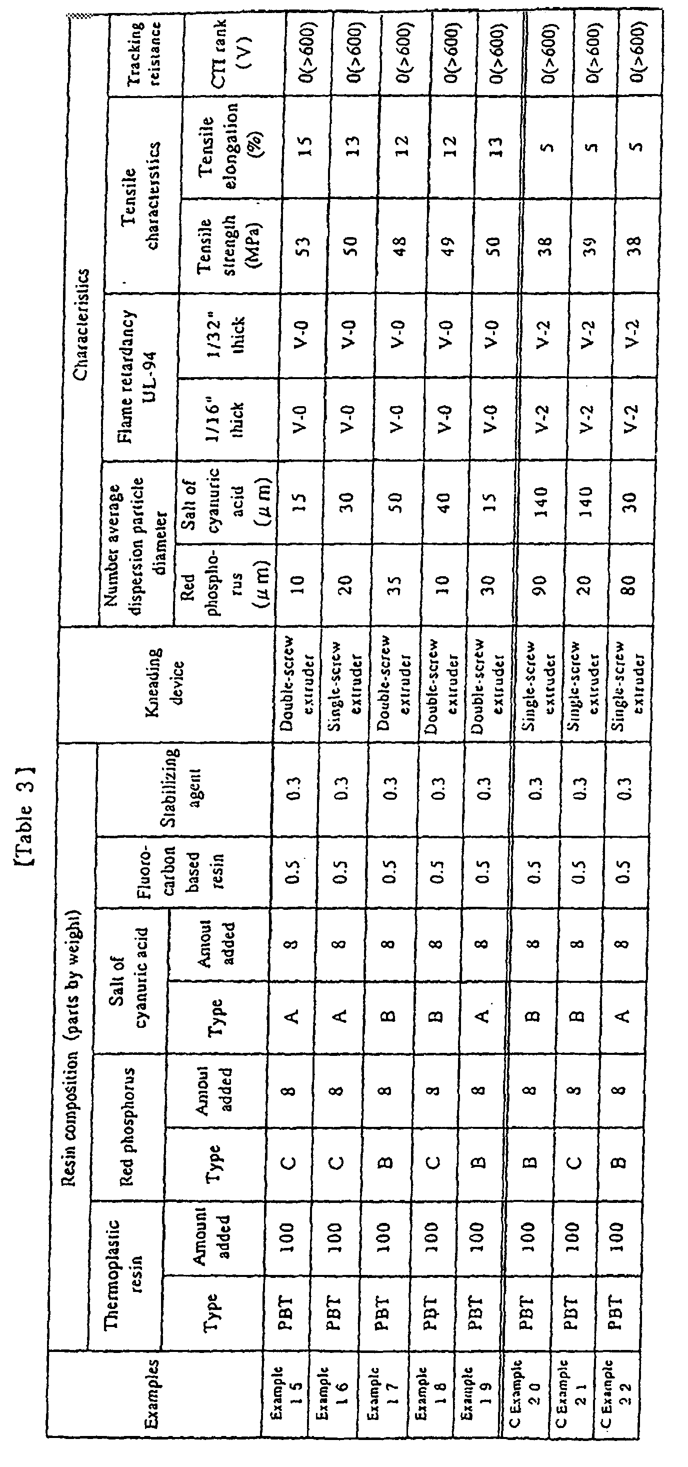

From Examples 15-19 and Comparative Examples 20-22, it is understandable that in a case where both red phosphorus and cyanurate salt are compounded in PBT, even though the particle diameters of red phosphorous and cyanurate salt at the time of compounding are large, the number average dispersion particle diameters of red phosphorus and cyanurate salt in the resin composition can be reduced by using a double-screw extruder having a high kneading power screw configuration, so that a high level of flame retardancy and excellent tensile characteristics are developed. Furthermore, if the particle diameter of either red phosphorus or cyanurate salt in the resin composition is large, excellent flame retardancy cannot be obtained and the tensile characteristics considerably deteriorate.

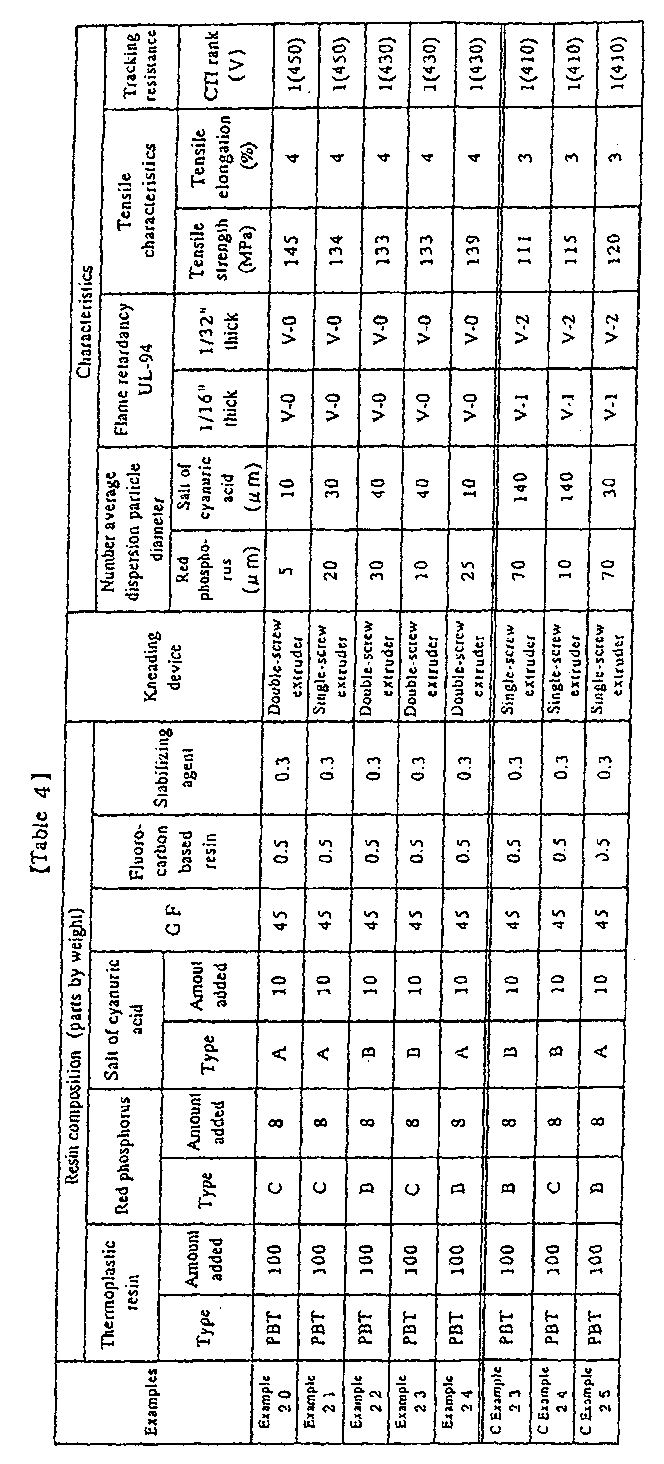

Similar discussion can be made regarding the cases of Examples 20-24 and Comparative Examples 23-25, where reinforcement is provided by glass fiber.

From the above discussion, it is understandable that a high level of flame retardation can be provided and excellent mechanical characteristics can be developed only by reducing the number average dispersion particle diameters of both red phosphorus and cyanurate salt in the resin composition. It is also understandable that tracking resistance improves in PBTs reinforced with glass fiber.

### EXAMPLES 25-31, COMPARATIVE EXAMPLES 26-35

Red phosphorus, salt of cyanuric acid or isocyanuric acid, and other additives shown in Tables 5-8 were mixed with 100 parts by weight of each of commercially available poly(1,4-cyclohexanedimethylene terephthalate) (PCT), bisphenol A-type polycarbonate (PC), nylon 6 (PA6), nylon 66 (PA66) and ABS resin. The mixtures were melted and extruded by using the aforementioned double-screw extruders and single-screw extruders. After the resultant pellets were dried, tensile test pieces defined in ASTMD-638 were prepared by injection molding and flame retardancy evaluation test pieces based on UL94 were prepared by press forming.

The measurement results of number average dispersion particle diameter, flame retardancy and mechanical characteristics of the individual samples are summarized and shown in Tables 5-8.

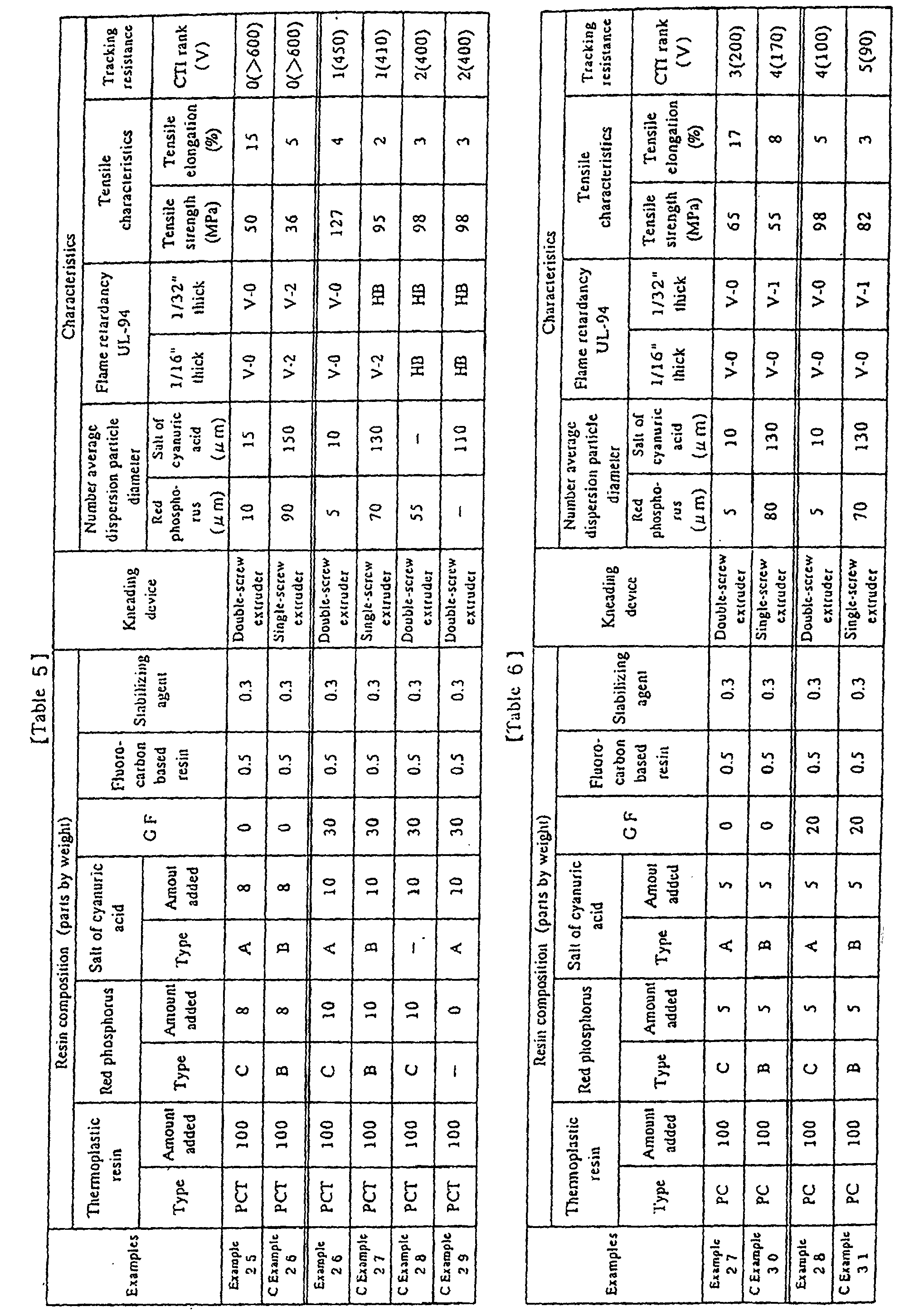

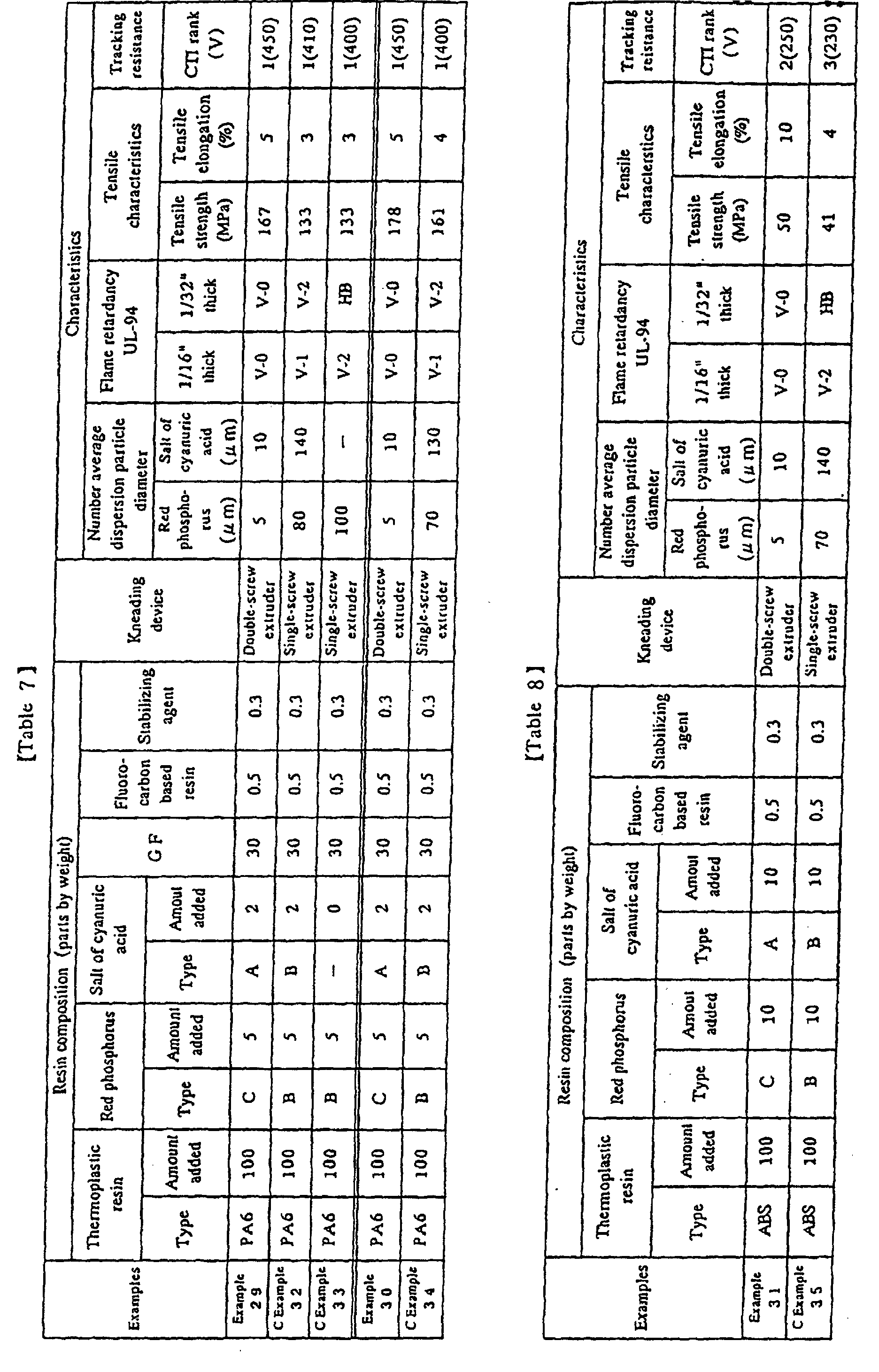

From Examples 25, 26 and Comparative Examples 26-29, the compounding of only red phosphorus or only a triazine compound into PCT resin does not provide excellent flame retardancy. It is also understandable that despite employing both red phosphorus and cyanurate salt in PCT resin, excellent flame retardancy cannot be provided and the tensile characteristics deteriorate if the number average dispersion particle diameter in the resin composition is large, but that by reducing the number average dispersion particle diameters of both red phosphorus and cyanurate salt, a high level of flame retardancy is provided and excellent mechanical characteristics are developed.

From Examples 27, 28 and Comparative Examples 30, 31, it is understandable that despite employing both red phosphorus and cyanurate salt in PCT resin, excellent flame retardancy cannot be provided and the tensile characteristics deteriorate if the number average dispersion particle diameter is large, but that by reducing the number average dispersion particle diameters of both red phosphorus and cyanurate salt, a high level of flame retardancy is provided and excellent mechanical characteristics are developed.

From Examples 29, 20 and Comparative Examples 32-34, the compounding of only red phosphorus into nylon resin does not provide excellent flame retardancy. It is also understandable that despite employing both red phosphorus and cyanurate salt, excellent flame retardancy cannot be provided and the tensile characteristics deteriorate if the number average dispersion particle diameter is large, but that by reducing the number average dispersion particle diameters of both red phosphorus and cyanurate salt, a high level of flame retardancy is provided and excellent mechanical characteristics are developed.

From Example 31 and Comparative Example 35, it is understandable that despite employing both red phosphorus and cyanurate salt in ABS resin, excellent flame retardancy cannot be provided and the tensile characteristics deteriorate if the number average dispersion particle diameter is large, but that by reducing the number average dispersion particle diameters of both red phosphorus and cyanurate salt, a high level of flame retardancy is provided and excellent mechanical characteristics are developed.

As stated above, high levels of flame retardancy can be provided and excellent mechanical characteristics can be developed in many thermoplastic resins by reducing the number average dispersion particle diameters of both red phosphorus and cyanurate salt.

### INDUSTRIAL APPLICABILITY

The flame retardant resin composition obtained according to the present invention is not only good in flame retardancy but has no adverse effect on the characteristics of thermoplastic resin. Therefore, it is excellent in mechanical characteristics, external appearance and electrical characteristics (tracking resistance), and useful for machine component parts, electrical component parts, electronic component parts and motor vehicle component parts.

## Claims

1. A flame retardant resin composition comprising
(A) 100 parts by weight of a thermoplastic polyester resin,
(B) 0.1 - 100 parts by weight of red phosphorous, and
(C) 0.5 - 100 parts by weight of a salt formed from a triazine based compound and cyanuric acid or isocyanuric acid, wherein the number average dispersion particle diameter of the red phosphorous in the resin composition is 50 - 0.01 µm, and wherein the number average dispersion particle diameter of the salt formed from a triazine based compound and cyanuric acid or isocyanuric acid is 100 - 0.01 µm.

2. A flame retardant resin composition according to claim 1, wherein the triazine based compound is a compound represented by the following general formula (1): 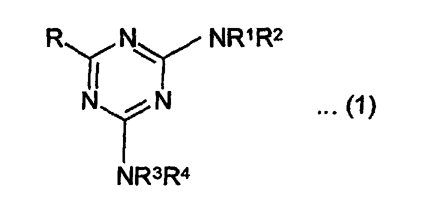 (wherein, in the above formula, R¹, R², R³, and R⁴ which may be the same or different, are each independently selected from hydrogen, an aryl group, an alkyl group, an aralkyl group, a cycloalkyl group and -CONH₂, R is the same as -NR¹R² or -NR³R⁴ above or is independently selected from hydrogen, an aryl group, an alkyl group, an aralkyl group, a cycloalkyl group, -NH₂ and -CONH₂.)

3. A flame retardant resin composition according to claim 1, wherein the triazine based compound is melamine.

4. A flame retardant resin composition according to any one of claims 1 to 3, wherein the thermoplastic resin (A) is selected from polybutylene terephthalate, polybutylene naphthalate, polycyclohexanedimethylene terephthalate, polyethylene naphthalate and polyethylene terephthalate.

5. A flame retardant resin composition according to any preceding claim, which comprises 1 to 50 parts by weight of red phosphorous (B) relative to 100 parts by weight resin (A).

6. A flame retardant resin composition according to any preceding claim, which comprises 3 to 70 parts by weight of triazine based salt (C) relative to 100 parts by weight resin (A).

7. A flame retardant resin composition according to any preceding claim, wherein 5 - 140 parts by weight of a filling material is further compounded into 100 parts by weight of the thermoplastic resin (A).

8. A flame retardant resin composition according to claim 7, wherein the filling material is glass fiber.

9. A flame retardant resin composition according to any preceding claim, wherein 0.01 - 10 parts by weight of a fluorocarbon based resin is further compounded into 100 parts by weight of the thermoplastic resin (A).

10. A flame retardant resin composition according to any preceding claim, wherein 0.01 - 3 parts by weight of a hindered phenol based stabilizing agent is further compounded into 100 parts by weight of the thermoplastic resin (A).

11. A formed article derived from a flame retardant resin composition as defined in any one of the preceding claims.

12. A formed article according to claim 11, wherein the form is any one of: a machine mechanism component part, an electrical component part, an electronic component part, and a motor vehicle component part.

## Patentansprüche

1. Flammhemmende Harzzusammensetzung, umfassend
(A) 100 Gewichtsteile eines thermoplastischen Polyesterharzes,
(B) 0,1 bis 100 Gewichtsteile roten Phosphor und
(C) 0,5 bis 100 Gewichtsteile eines Salzes, das aus einer Verbindung auf Triazin-Basis und Cyanursäure oder Isocyanursäure gebildet ist, worin der zahlenmittlere Dispersions-Teifchendurchmesser des roten Phosphors in der Harzzusammensetzung 50 bis 0,01 µm beträgt, und worin der zahlenmittlere Dispersions-Teilchendurchmesser des Salzes, das aus einer Verbindung auf Triazin-Basis und Cyanursäure oder Isocyanursäure gebildet ist, 100 bis 0,01 µm beträgt.

2. Flammhemmende Harzzusammensetzung nach Anspruch 1, worin die Verbindung auf Triazin-Basis eine Verbindung der folgenden allgemeinen Formel (1) ist: 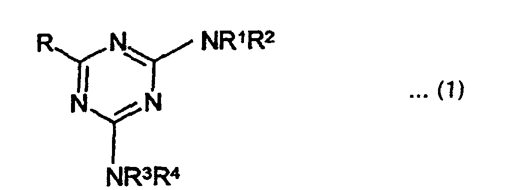 (wobei in dieser Formel R¹, R², R³ und R⁴, die gleich oder unterschiedlich sein können, jeweils unabhängig voneinander aus Wasserstoff, Arylgruppen, Alkylgruppen, Aralkylgruppen, Cycloalkylgruppen und -CONH₂ ausgewählt sind, R dasselbe wie die obigen -NR¹R² oder -NR³R⁴ ist oder aus Wasserstoff, Arylgruppen, Arylgruppen, Alkylgruppen, Aralkylgruppen, Cycloalkylgruppen, -NH₂ und -CONH₂ ausgewählt ist).

3. Flammhemmende Harzzusammensetzung nach Anspruch 1, worin die Verbindung auf Triazin-Basis Melamin ist.

4. Flammhemmende Harzzusammensetzung nach einem der Ansprüche 1 bis 3, worin das thermoplastische Harz (A) aus Polybutylenterephthalat, Polybutylennaphthalat, Polycyclohexandimethylentherephthalat, Polyethylennaphthalat und Polyethylenterephthalat ausgewählt ist.

5. Flammhemmende Harzzusammensetzung nach einem der vorhergehenden Ansprüche, die 1 bis 50 Gewichtsteile roten Phosphor (B) pro 100 Gewichtsteile Harz an (A) umfasst.

6. Flammhemmende Harzzusammensetzung nach einem der vorhergehenden Ansprüche, welche 3 bis 70 Gewichtsteile des Salzes auf Triazin-Basis (C) pro 100 Gewichtsteile an Harz (A) umfasst.

7. Flammhemmende Harzzusammensetzung nach einem der vorhergehenden Ansprüche, worin außerdem 5 bis 140 Gewichtsteile eines Füllstoffs pro 100 Gewichtsteile des thermoplastischen Harzes (A) eingemischt sind.

8. Flammhemmende Harzzusammensetzung nach Anspruch 7, worin der Füllstoff aus Glasfasern besteht.

9. Flammhemmende Harzzusammensetzung nach einem der vorhergehenden Ansprüche, worin außerdem 0,01 bis 10 Gewichtsteile eines Harzes auf Fluorkohlenstoff-Basis pro 100 Gewichtsteile des thermoplastischen Harzes (A) eingemischt sind.

10. Flammhemmende Harzzusammensetzung nach einem der vorhergehenden Ansprüche, worin außerdem 0,01 bis 3 Gewichtsteile eines Stabilisators auf Basis eines sterisch gehinderten Phenols pro 100 Gewichtsteile des thermoplastischen Harzes (A) eingemischt sind.

11. Formteil aus einer flammhemmenden Harzzusammensetzung nach einem der vorhergehenden Ansprüche.

12. Formteil nach Anspruch 11, worin die Form aus einem Maschinenmechanismus-Bauteil, einem elektrischen Bauteil, einem elektronischen Bauteil und einem Kraftfahrzeug-Bauteil ausgewählt ist.

## Revendications

1. Composition de résine ignifuge comprenant
(A) 100 parties en poids d'une résine polyester thermoplastique,
(B) 0,1 - 100 parties en poids de phosphore rouge, et
(C) 0,5 - 100 parties en poids d'un sel formé à partir d'un composé à base de triazine et d'acide cyanurique ou d'acide isocyanurique, où le diamètre moyen en nombre des particules du phosphore rouge en dispersion dans la composition de résine est de 50-0,01 µm, et où le diamètre moyen en nombre des particules du sel formé en dispersion à partir d'un composé à base de triazine et d'acide cyanurique ou d'acide isocyanurique est de 100-0,01 µm.

2. Composition de résine ignifuge selon la revendication 1, où le composé à base de triazine est un composé représenté par la formule générale (1) qui suit : 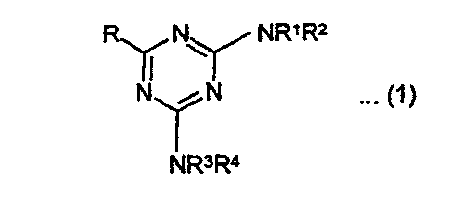 (où dans la formule ci-dessus, R¹, R², R³ et R⁴, qui peuvent être identiques ou différents, sont indépendamment sélectionnés parmi hydrogène, un groupe aryle, un groupe alkyle, un groupe aralkyle, un groupe cycloalkyle et -CONH₂, R est le même que -NR¹R² ou -NR³R⁴ ci-dessus ou est indépendamment sélectionné parmi hydrogène, un groupe aryle, un groupe alkyle, un groupe aralkyle, un groupe cycloalkyle, -NH₂ et -CONH₂).

3. Composition de résine ignifuge selon la revendication 1, où le composé à base de triazine est de la mélamine.

4. Composition de résine ignifuge selon l'une quelconque des revendications 1 à 3, où la résine thermoplastique (A) est sélectionnée parmi le polybutylène téréphtalate, le polybutylène naphtalate, le polycyclohexanediméthylène téréphtalate, le polyéthylène naphtalate et le polyéthylène téréphtalate.

5. Composition de résine ignifuge selon toute revendication précédente, qui comprend 1 à 50 parties en poids de phosphore rouge (B) relativement à 100 parties en poids de la résine (A).

6. Composition de résine ignifuge selon toute revendication précédente, qui comprend 3 à 70 parties en poids du sel à base de triazine (C) relativement à 100 parties en poids de la résine (A).

7. Composition de résine ignifuge selon toute revendication précédente, où 5-140 parties en poids d'une matière de charge est de plus mélangée dans 100 parties en poids de la résine thermoplastique (A).

8. Composition de résine ignifuge selon la revendication 7, où la matière de charge est de la fibre de verre.

9. Composition de résine ignifuge selon toute revendication précédente, où 0,01-10 parties en poids d'une résine à base de fluorocarbone est de plus mélangée dans 100 parties en poids de la résine thermoplastique (A).

10. Composition de résine ignifuge selon toute revendication précédente, où 0,01-3 parties en poids d'un agent stabilisant à base de phénol empêché est de plus mélangé dans 100 parties en poids de la résine thermoplastique (A).

11. Article formé dérivé d'une composition de résine ignifuge telle que définie dans l'une quelconque des revendications précédentes.

12. Article formé selon la revendication 11, où la forme est l'une de : une pièce de composant de mécanisme de machine, une pièce de composant électrique, une pièce de composant électronique et une pièce de composant de véhicule à moteur.
